# EUROPÄISCHE PATENTANMELDUNG

(11) **EP 4 101 730 A1**
(43) Veröffentlichungstag der Anmeldung: **14.12.2022**
(21) Anmeldenummer: 22171364.7
(22) Anmeldetag: 03.05.2022
(51) Int. Cl.: B62B 3/16, B62B 5/00, B62B 5/04

(54) **LADUNGSTRÄGER**

(30) Priorität: 10.06.2021 DE 102021115058
(71) Anmelder: IPP GmbH, 58256 Ennepetal (DE)
(72) Erfinder: de Greef, Peter, 7701CN Dedemsvaart (NL)
(74) Vertreter: Roche, von Westernhagen & Ehresmann

(57) **Zusammenfassung**

Die Erfindung betrifft unter anderem einen Ladungsträger (10) zum Transport und/oder zur Aufbewahrung von Gütern, insbesondere in Form einer Dolly, umfassend ein aus Kunststoff bestehendes Deck (11), an dessen Oberseite (12) eine Auflagefläche (13) für die Güter oder für eine Einrichtung zur Aufnahme der Güter bereitgestellt ist, und an dessen Unterseite (14) eine Mehrzahl von Rollen (15a, 15b, 15c, 15d) angeordnet ist. Die Besonderheit besteht unter anderem darin, dass die Auflagefläche wenigstens eine taschenartige Aufnahme (29b, 29c) aufweist, in die eine Rolle (17c) eines auf der Auflagefläche angeordneten, weiteren Ladungsträgers (10') einsetzbar ist, wobei die Aufnahme (29b, 29c) eine Einrichtung (30) zur Bewegungsverhinderung der eingesetzten Rolle (17c) umfasst.

## Beschreibung

Die Erfindung betrifft einen Ladungsträger nach dem Oberbegriff des Anspruches 1.

Die Anmelderin gehört zu den führenden Unternehmen Europas im Bereich der Bereitstellung von tauschbaren Ladungsträgern, die in sogenannten Pools vorgehalten werden. Insbesondere werden von der Anmelderin Paletten, beispielsweise Halbpaletten und Viertelpaletten zum Tausch bereitgestellt.

Die Anmelderin hat Ladungsträger seit geraumer Zeit entwickelt und umfangreich eingesetzt, wie sie beispielsweise in der DE 10 2011 003 999 A1 beschrieben sind. Bei einer solchen Palette sind insbesondere Abmessungen einer Viertelpalette vorgesehen, so dass vier nebeneinander gestellte und zu einem Rechteck konfigurierte Viertelpaletten die Maße einer Standard-Europalette (80 cm x 120 cm) ergeben. Demzufolge besitzt eine Viertelpalette Abmessungen mit einer Länge von 60 cm und einer Breite von 40 cm.

Der vorbekannte Ladungsträger der eingangs beschriebenen Art besteht aus Kunststoff und ist als Kunststoffspritzgussteil hergestellt. An der Oberseite stellt der bekannte Ladungsträger eine Auflagefläche für die Güter bereit. Hier können die Güter, z. B. Displaywaren, also beispielsweise auf einem Kartonagesockel aufgestellte Kartonagetrays mit Aktionsware befüllt, aufgestellt werden. Die bekannte Viertelpalette fügt sich gut in bestehende Logistiksysteme ein.

Der bekannte Ladungsträger weist vier eckseitig angeordnete, ebenfalls aus Kunststoff mit angespritzte Füße auf. Die Füße sind voneinander beabstandet und können von Flurförderfahrzeugen, z. B. von einem Gabelstapler, untergriffen werden, und nach dem Anheben einfach transportiert werden.

Alternativ zu der Anordnung von festen Füßen ist es bekannt, bei Ladungsträgern Rollen vorzusehen. Hierzu können beispielsweise vier Rollen vorgesehen sein, so dass im Eckbereich des Ladungsträgers jeweils eine Rolle angebracht ist.

Beispielsweise können zwei feststehende Rollen und zwei lenkbare Rollen vorgesehen sein. Die lenkbare Rolle kann einen Hebel aufweisen. Dieser ist auch als Bremshebel oder Feststellhebel bezeichenbar, und erlaubt eine Betätigung per Fuß. Durch einmaliges Treten auf den Hebel kann die Bremse, insbesondere die Rolle, festgestellt werden, und z. B. in ihrer Orientierung und/oder in Laufrichtung, festgestellt werden. Eine weitere Betätigung des Hebels, entlang derselben Richtung, oder entlang einer entgegengesetzten Richtung, kann zu einem Lösen der Sperre oder der Bremse führen.

Im Stand der Technik ist darüber hinaus ein Ladungsträger in Form einer Dolly-Viertelpalette durch offenkundige Vorbenutzung bekannt geworden, bei dem in der Auflagefläche vier taschenartige Aufnahmen angeordnet sind, in die Rollen einer auf den Ladungsträger gestapelt angeordneten Palette einsetzbar sind. Die Aufnahmen weisen eine kontinuierlich gekrümmte Kontur auf, die an die Kontur der Rolle angepasst ist.

Ausgehend dem eingangs beschriebenen, druckschriftlich nicht belegbaren Stand der Technik besteht die Aufgabe der Erfindung darin, einen Ladungsträger mit den Merkmalen des Oberbegriffs des Anspruches 1 derartig weiterzubilden, dass eine verbesserte Handhabung möglich wird.

Die Erfindung löst diese Aufgabe mit den Merkmalen des Anspruches 1, insbesondere mit denen des Kennzeichenteils, und ist demgemäß dadurch gekennzeichnet, dass die Auflagefläche wenigstens eine taschenartige Aufnahme aufweist, in die eine Rolle eines auf der Auflagefläche angeordneten, weiteren Ladungsträgers einsetzbar ist, wobei die Aufnahme eine Einrichtung zur Bewegungsverhinderung der eingesetzten Rolle umfasst.

Das Prinzip der Erfindung besteht im wesentlichen darin, an der Aufnahme eine Einrichtung anzuordnen, die eine Bewegung der eingesetzten Rolle sicher verhindert. Eine solche Bewegungsverhinderung kann Anschlagflächen oder Halteflächen umfassen, mit denen die eingesetzte Rolle an einer unbeabsichtigten Herausbewegung aus der Aufnahme heraus gehindert wird.

Der erfindungsgemäße Ladungsträger besteht aus Kunststoff. Er kann beispielsweise Abmessungen einer Viertelpalette oder einer Halbpalette aufweisen, insbesondere rechteckförmig ausgebildet sein. Er umfasst ein Deck mit einer Oberseite und mit einer Unterseite. Die Oberseite stellt eine Auflagefläche bereit, auf der entweder unmittelbar Güter aufgesetzt werden, oder auf der eine Einrichtung, z. B. ein Displaysockel, eine Kiste oder ein anderer Ladungsträger aufgesetzt wird, der die zu transportierenden oder zu präsentierenden Güter aufnimmt.

Bei einer Ausführungsform des erfindungsgemäßen Ladungsträgers ist die Auflagefläche im wesentlichen durchgehend ausgebildet. Dies bedeutet, dass entlang der Abmessungen des Ladungsträgers, insbesondere entlang seiner Länge und entlang seiner Breite, die Auflagefläche bis auf funktionale Ausnehmungen, Durchbrüche, Öffnungen, anderer Elemente, z. B. auch Noppen, durchgehend ausgebildet ist. Das Deck kann aus Gründen eines Leichtbaus und zur Erzielung einer hohen Stabilität mit einer Konstruktion aus Versteifungsstreben, Versteifungsrippen und dazwischen angeordneten Hohlkammern gebildet sein.

An der Unterseite des Decks ist eine Mehrzahl von Rollen angeordnet. Vorzugsweise weist der Ladungsträger vier Rollen auf, so dass in jeder Ecke eine Rolle angeordnet ist.

Zum Zwecke einer Stapelanordnung von Ladungsträgern bei geringer Stapelhöhe sind bei dem erfindungsgemäßen Ladungsträger an der Auflagefläche taschenartige Aufnahmen angeordnet. In diese Aufnahme hinein können die Rollen des gestapelt angeordneten, also auf den Ladungsträger aufgesetzten weiteren Ladungsträgers, eingesetzt werden. Die Aufnahmen sind so bemessen, dass die Rolle mit einem relevanten Umfangswinkelbereich von z. B. etwa 120 bis 130° in die Aufnahme hinein eintauchen kann.

Die Einrichtung zur Bewegungsverhinderung sorgt dafür, dass die in die Aufnahme eingesetzte Rolle an einer unbeabsichtigten Bewegung gehindert wird. Hierdurch wird erreicht, dass bei einer Stapelanordnung mehrerer Ladungsträger der jeweils oberhalb angeordnete Ladungsträger oder die Mehrzahl oberhalb angeordneten Ladungsträger keine Relativverlagerung zu dem unteren Ladungsträger erfahren kann. Ein unbeabsichtigtes Lösen der oberen Ladungsträger von den jeweils unteren Ladungsträgern, beispielsweise aufgrund von Vibrationen während des Transportes oder Verkippungen oder Verkantungen bei dem Transport eines Stapels von Ladungsträgern, kann auf diese Weise verhindert werden.

Das Handling mehrerer leerer Ladungsträger im gestapelten Zustand wird damit erleichtert und sicherer.

Beim Stand der Technik war bei dem Ladungsträger an der Oberseite eine Mehrzahl von taschenförmigen Aufnahmen vorgesehen, deren Aufnahmekontur bogenförmig ausgebildet war, in Anlehnung und Anpassung an die Außenkontur einer Rolle. Wenn auf den oberhalb angeordneten Ladungsträger relativ zu dem unteren Ladungsträger Kräfte ausgeübt wurden, konnten Relativbewegungen zwischen den Ladungsträgern stattfinden, da die Rollen entlang der taschenförmigen Aufnahmen verfahren konnten.

Hier setzt die Erfindung an: Erfindungsgemäß ist eine Einrichtung zur Bewegungsverhinderung vorgesehen. Insbesondere kann die Einrichtung die in die Aufnahme eingesetzte Rolle bewegungspielfrei festsetzen. Dabei kann insbesondere vorgesehen sein, dass die Einrichtung zwei Auflagebereiche umfasst, die linienartig ausgebildet sind. Die Auflagebereiche können die Rolle von dem Grund der Aufnahme beabstandet halten.

Die in die Aufnahme eingesetzte Rolle liegt also nur entlang der beiden Aufnahmebereiche auf. Hierdurch wird eine definierte Sollposition der eingesetzten Rolle relativ zu der Aufnahme gewährleistet. Insbesondere ist vorteilhaft, wenn die Rolle den Grund der Aufnahme nur entlang dieser beiden Auflagebereiche kontaktiert. Damit wird eine Art Zweipunktauflage erreicht und damit eine stabile, vorherbestimmte geometrische Relativposition gewährleistet.

Die beiden Auflagebereiche stellen die äußersten Randbereiche der taschenförmigen Aufnahme bereit. Einwärts der Auflagebereiche sind an der Aufnahme Freiräume vorgesehen, wobei entlang dieser Freiräume kein Kontakt zwischen der Außenumfangsfläche der eingesetzten Rolle und dem Grund der Aufnahme stattfindet. Um die eingesetzte Rolle aus der Einsetzposition heraus zu verlagern, müssen daher - im Verhältnis zum Stand der Technik - erheblich höhere Kräfte aufgewandt werden. Unbeabsichtigte Relativverlagerungen von gestapelten Ladungsträgern können damit verhindert werden.

Vorteilhaft ist die Einrichtung zur Bewegungsverhinderung von einer besonderen Kontur der taschenförmigen Aufnahme bereitgestellt. Dies ermöglicht eine besonders einfache Fertigung und Konstruktion, da die Einrichtung selbst bei der Herstellung des Ladungsträgers mit angeformt werden kann.

Im Sinne dieser Überlegung ist es also nicht erforderlich, dass die Einrichtung zur Bewegungsverhinderung gesonderte Bauteile fordert. Die Einrichtung zur Bewegungsverhinderung kann also im Zuge der Fertigung des Ladungsträgers und im Zuge der Fertigung der Aufnahme in einem Zuge mitgefertigt werden. Freilich ist von der Erfindung auch umfasst, wenn die Einrichtung zur Bewegungsverhinderung von dem Ladungsträger gesonderte Elemente, z. B. Gummilippen oder dergleichen aufweist.

Besonders vorteilhaft ist, wenn die Einrichtung zur Bewegungsverhinderung im Bereich des Randes der taschenartigen Aufnahme angeordnet ist.

Von der Erfindung ist aber auch umfasst, wenn die Einrichtung zur Bewegungsverhinderung entsprechende Keilflächen oder Klemmflächen oder Halteflächen aufweist, die näher am Grund der Aufnahme angeordnet sind.

Gemäß einer vorteilhaften Ausgestaltung der Erfindung setzt die Einrichtung die in die Aufnahme eingesetzte Rolle bewegungsspielfrei fest. Hierdurch wird eine besonders hohe Sicherheit erreicht.

Gemäß einer weiteren vorteilhaften Ausgestaltung der Erfindung sind der Einrichtung Mittel zum Ausgleich von Toleranzen, insbesondere zum Ausgleich von Fertigungstoleranzen, zugeordnet. Dies ermöglicht eine besonders sichere Verhinderung einer Relativbewegung von gestapelten Ladungsträgern.

Die Mittel zum Ausgleich von Toleranzen können beispielsweise dadurch bereitgestellt werden, dass jeweils einer taschenförmigen Aufnahme, die eine Einrichtung zur Bewegungsverhinderung aufweist, eine weitere taschenförmige Aufnahme zugeordnet ist, die Mittel zum Ausgleich von Toleranzen aufweist. Die Aufnahme, die Mittel zum Ausgleich von Toleranzen aufweist, kann in herkömmlicher Art und Weise mit einer Kontur der Aufnahme versehen sein, die z. B. bogenförmig ausgebildet und an die Kontur der Rolle angepasst ist. Hierdurch kann, abhängig von herstellungsbedingten Toleranzen, ggf. auch von Temperaturtoleranzen oder von Montagetoleranzen bei der Montage der Rollen, ggf. auch zum Ausgleich von Toleranzen bei der Montage der Rollen oder bei aufgetretenen Beschädigungen der Rollen oder Beschädigungen oder Verformungen des Ladungsträgers, gewährleistet werden, dass die Rolle, die in die Aufnahme eingesetzt ist, und eine Einrichtung zur Bewegungsverhinderung aufweist, die dort geforderte Sollposition erreicht.

Bei dem zuletzt beschriebenen Ausführungsbeispiel können die Mittel zum Ausgleich von Toleranzen durch großzügig bemessene und/oder insbesondere bogenförmig gekrümmte und Anrollflächen aufweisende Konturen von taschenförmigen Aufnahmen benachbarter Aufnahmen gebildet sein.

Gemäß einer weiteren vorteilhaften Ausgestaltung der Erfindung stellt die Einrichtung zwei Auflagebereiche für die eingesetzte Rolle bereit. Dadurch wird eine Zweipunktauflage für die Rolle erreicht. Dies ermöglicht eine Erreichung einer besonders stabilen Sollposition.

Gemäß einer weiteren vorteilhaften Ausgestaltung der Erfindung sind die Auflagebereiche linienartig ausgebildet. Hierdurch kann eine Auflage der Rolle entlang ihres gesamten Querschnitts der Außenumfangsfläche der Rolle gewährleistet werden. Dies erhöht die Stabilität des Aufbaus gestapelter Ladungsträger.

Gemäß einer weiteren vorteilhaften Ausgestaltung der Erfindung sind die Auflagebereiche auf unterschiedlichen Seiten einer Drehachse der Rolle angeordnet. Dies ermöglicht eine besonders stabile Konstruktion.

Gemäß einer weiteren vorteilhaften Ausgestaltung der Erfindung stellen die Auflagebereiche einen oberen Rand der Aufnahme bereit. Dies ermöglicht eine besonders einfache Konstruktion eines erfindungsgemäßen Ladungsträgers.

Gemäß einer weiteren vorteilhaften Ausgestaltung der Erfindung halten die Auflagebereiche die eingesetzte Rolle von dem Grund der Aufnahme beabstandet. Diese Ausführungsform der Erfindung ermöglicht eine zweipunktartige Auflage der Rolle auf Auflagebereichen und damit eine besonders hohe Stabilität. Die Beabstandung der eingesetzten Rolle von dem Grund der Aufnahme kann sehr gering sein und beispielsweise nur einen oder mehrere Millimeter oder nur Bruchteile von Millimetern betragen.

Von der Erfindung ist auch umfasst, wenn die Auflagebereiche die eingesetzte Rolle vom Grund der Aufnahme nur dann beabstandet halten, wenn nur ein Ladungsträger oder wenige Ladungsträger gestapelt auf einem Ladungsträger angeordnet sind. Für den Fall, dass eine Vielzahl von Ladungsträgern, z. B. 15 oder 20 gestapelte Ladungsträger auf einem Ladungsträgerstapel zusammengefasst sind, kann von der Erfindung auch umfasst sein, dass aufgrund des hohen Gewichtes der aufliegenden Ladungsträger bei den untersten oder bei mehreren unteren Ladungsträgern diese Beabstandung der eingesetzten Rolle von dem Grund der Aufnahme nicht mehr gewährleistet wird, sondern aufgrund des großen Gewichtes eine Materialverformung eintritt, so dass es zu einer Kontaktierung kommt.

Im Bereich der beiden Auflagebereiche können hierzu z. B. auch entsprechende Führungsschrägen oder Zentrierflächen vorgesehen sein, die es ermöglichen, dass die eingesetzte Rolle - bei hohem Stapelaufbau und bei hohem Gewicht oder hohem Auflagedruck - weiter, d. h. tiefer, in die Aufnahme hinein gedrückt wird. Dabei können diese Steuerflächen zugleich als Zentrierschrägen fungieren.

Gemäß einer weiteren vorteilhaften Ausgestaltung der Erfindung weist die Aufnahme eine von einer bogenförmigen Kontur abweichende Kontur auf. Dies ermöglicht auf einfache Weise die Bereitstellung einer Bewegungsverhinderung.

Gemäß einer weiteren vorteilhaften Ausgestaltung der Erfindung weist die Aufnahme eine von mehreren geradlinig ausgebildeten Segmenten zusammengesetzte Kontur auf. Dies ermöglicht eine besonders einfache Konstruktion des erfindungsgemäßen Ladungsträgers.

Gemäß einer weiteren vorteilhaften Ausgestaltung der Erfindung sind an der Auflagefläche vier Aufnahmen angeordnet. Dabei kann vorgesehen sein, dass zwei der Aufnahmen eine Einrichtung zur Bewegungsverhinderung umfassen und die beiden anderen Aufnahmen Mittel zum Ausgleich von Toleranzen umfassen. So kann beispielsweise vorgesehen sein, dass zwei Aufnahmen jeweils von einer polygonartigen Struktur oder von einer von mehreren geradlinigen Segmenten gebildeten Struktur bereitgestellt sind, und die beiden anderen Aufnahmen eine bogenförmige Kontur aufweisen.

Dabei ist eine Anordnung der unterschiedlichen taschenartigen Aufnahmen so getroffen, dass jeweils eine Aufnahme, die Mittel zum Ausgleich von Toleranzen aufweist, in relativer Bewegungsrichtung des aufliegenden Ladungsträgers zu derjenigen Aufnahme angeordnet ist, die eine Einrichtung zur Bewegungsverhinderung umfasst.

Gemäß einer weiteren vorteilhaften Ausgestaltung der Erfindung erstreckt sich von der Unterseite des Decks wenigstens ein Gehäuse für eine Rolle weg. Das Gehäuse bildet ein Lager zur Haltung der Rolle aus und überfängt die Rolle im montierten Zustand zumindest teilweise. Hierdurch kann eine besonders einfache Halterung einer Rolle erreicht werden, dies bei einfacher Konstruktion des Ladungsträgers. Auch bietet ein solches Gehäuse Schutz der Rolle vor Beschädigungen und Einwirkungen von außen.

Gemäß einer weiteren vorteilhaften Ausgestaltung der Erfindung weist der Ladungsträger eine randseitige Ausnehmung zur Verbesserung eines Zugangs zu einem Hebel an einer lenkbaren Rolle auf. Dies ermöglicht bei einfacher Konstruktion eine erleichterte Bedienbarkeit eines solchen fußbetätigbaren Feststell- oder Bremshebels einer Rolle.

Gemäß einer weiteren vorteilhaften Ausgestaltung der Erfindung weist der Ladungsträger Abmessungen auf, nämlich eine Länge und eine Breite, die den Abmessungen eines herkömmlichen Ladungsträgers entsprechen. Angemerkt sei, dass auch die Höhe eines Ladungsträgers gemäß der Erfindung der Höhe eines herkömmlichen Ladungsträgers entsprechen kann.

Gemäß einer vorteilhaften Ausgestaltung der Erfindung weist der Ladungsträger Abmessungen, nämlich eine Länge und eine Breite, auf, die den Abmessungen einer Viertelpalette entsprechen. Alternativ können die Abmessungen des erfindungsgemäßen Ladungsträgers auch den Abmessungen einer Halbpalette oder einer anderen, insbesondere standardisierten Abmessung eines herkömmlichen Ladungsträgers entsprechen.

Schließlich kommen auch andere genormte Abmessungen in Betracht, so dass der erfindungsgemäße Ladungsträger ggf. gut in bestehende Logistikkonzepte und -Systeme integrierbar ist.

Gemäß einer weiteren vorteilhaften Ausgestaltung der Erfindung ist der Ladungsträger dadurch gekennzeichnet, dass das Deck entlang einer Länge und entlang einer Breite des Ladungsträgers, mit Ausnahme von Versteifungsstrukturen oder funktionalen Flächen, im Wesentlichen durchgehend ausgebildet ist.

Gemäß einer weiteren vorteilhaften Ausgestaltung der Erfindung ist das Deck durchgehend oder im wesentlichen durchgehend ausgebildet. Das Deck erstreckt sich durchgehend entlang einer Länge und entlang einer Breite des Ladungsträgers. Ausgenommen von der durchgehenden Ausbildung des Ladungsträgers sind Versteifungstrukturen des Decks und/oder funktionale Flächen, z. B. Befestigungsflächen, Befestigungsschlitze, taschenartige Aufnahmen für Rollen einer auf dem Ladungsträger gestapelten Rolle, etc.

Als funktionale Fläche werden auch Befestigungsöffnungen oder Rücksprünge oder Ausnehmungen oder Erhebungen oder Noppen oder dergleichen bezeichnet.

Bei dieser Ausführungsform ist der Ladungsträger z. B. nach Art einer herkömmlichen Viertelpalette ausgebildet. Insbesondere können identische oder ähnliche Schnittstellen und Befestigungsflächen wie bei einem Ladungsträger des Standes der Technik vorgesehen sein.

So können beispielsweise nach innen versetzte Ecken vorgesehen sein, die ein Überstülpen von Display-Sockelfortsätzen ermöglichen.

Auch können entlang der Schmalseiten und/oder entlang der Längsseiten des Ladungsträgers, z. B. jeweils mittig an einer entsprechenden Seite angeordnet, Aufnahmen vorgesehen sein, die eine Befestigung von Display-Sockelfortsätzen ermöglichen. Zur Vermeidung von Wiederholungen wird verwiesen auf die deutsche Patentanmeldung DE 10 2011 003 999 A1 der Anmelderin, deren Inhalt hiermit vollständig in den Inhalt der vorliegenden Anmeldung mit eingeschlossen wird, dies auch zum Zwecke, die Merkmale aus dieser Patentanmeldung in die Ansprüche der vorliegenden Patentanmeldung mit aufzunehmen.

Gemäß einer vorteilhaften Ausgestaltung der Erfindung ist der Ladungsträger dadurch gekennzeichnet, dass die Oberseite des Decks als durchgehende oder im Wesentlichen durchgehende Auflagefläche für die Güter ausgebildet ist und sich entlang einer Länge und entlang einer Breite des Ladungsträgers erstreckt.

Gemäß einer alternativen Ausgestaltung der Erfindung ist der Ladungsträger rahmenartig ausgebildet, wobei das Deck eine zentrale Öffnung umrandet. Ein solcher rahmenartig ausgebildeter Ladungsträger weist eine Auflagefläche auf, auf der eine Einrichtung zur Aufnahme von Gütern aufgesetzt werden kann. Eine solche Einrichtung zur Aufnahme von Gütern kann beispielsweise eine herkömmliche Viertelpalette sein, oder ein Displaysockel, oder eine Kiste, oder ein Karton, eine Gitterbox, ein Container oder dergleichen.

Gemäß einer weiteren vorteilhaften Ausgestaltung der Erfindung weist der Ladungsträger vier Rollen auf. Gemäß dieser Ausgestaltung der Erfindung kann auf herkömmliche Bauformen von Ladungsträgern zurückgegriffen werden.

Gemäß einer weiteren vorteilhaften Ausgestaltung der Erfindung weist der Ladungsträger zwei feststehende Rollen und zwei lenkbare Rollen auf. Dies ermöglicht ebenfalls eine Anlehnung an Konstruktionen herkömmlicher Ladungsträger.

Gemäß einer weiteren vorteilhaften Ausgestaltung der Erfindung sind die Rollen in Eckbereichen des Ladungsträgers angeordnet. Dies ermöglicht eine besonders stabile Konstruktion.

Gemäß einer weiteren vorteilhaften Ausgestaltung der Erfindung ist der Ladungsträger stapelbar ausgebildet. Hierzu kann insbesondere vorgesehen sein, dass an der Auflagefläche des Ladungsträgers taschenartige Aufnahmen vorgesehen sind. Die taschenartigen Aufnahmen dienen der Aufnahme der Rollen eines benachbart angeordneten Ladungsträgers bei gestapelter Anordnung.

Hierdurch kann eine komprimierte Stapelung erreicht werden. Zugleich kann verhindert werden, dass bei gestapelter Anordnung mehrerer Ladungsträger übereinander eine unbeabsichtigte Relativbewegung der Ladungsträger eintritt.

Die Erfindung bezieht sich gemäß einem weiteren Aspekt auf eine Vorrichtung zur Warenpräsentation im Einzelhandel.

Insbesondere bezieht sich die Erfindung auf eine Vorrichtung nach Art eines Displays.

Als Display, oder als Vorrichtung zur Warenpräsentation, werden Vorrichtungen bezeichnet, die z. B. Aktionsware im Einzelhandel präsentieren und für einen Verkauf bereitstellen. Derartige Waren werden häufig auf Viertelpaletten, ggf. auch auf Halbpaletten, transportiert.

Derartige Vorrichtungen zur Warenpräsentation verbleiben in der Regel für eine gewisse Zeit in dem Verkaufsraum, bis die Waren abverkauft sind. Sodann werden die Kartonagen entsorgt und die aus Kunststoff bestehende Palette, die beim Stand der Technik feste Füße aufweist, wird rückgeführt. Dabei ist eine Stapelanordnung von rückzuführenden Ladungsträgern wünschenswert, um die Transportvolumina klein zu halten.

Die Erfindung schlägt hierzu eine Vorrichtung zur Warenpräsentation vor, die einen Ladungsträger nach einem der vorgenannten Ansprüche einsetzt.

Damit kann unter dem Erfordernis nur minimaler Transportvolumina eine Vielzahl von am Verkaufsort nicht mehr benötigten Ladungsträgern rücktransportiert werden.

Weitere Vorteile der Erfindung ergeben sich aus den nicht zitierten Unteransprüchen, sowie anhand der nachfolgenden Beschreibung der in den Zeichnungen dargestellten Ausführungsbeispiele der Erfindung. Darin zeigen:
- Fig. 1: in einer schematischen, perspektivischen Ansicht ein erstes Ausführungsbeispiel eines erfindungsgemäßen Ladungsträgers in Form einer Viertelpalette,
- Fig. 2: das Ausführungsbeispiel der Fig. 1 in einer Unteransicht gemäß Ansichtspfeil II in Fig. 1,

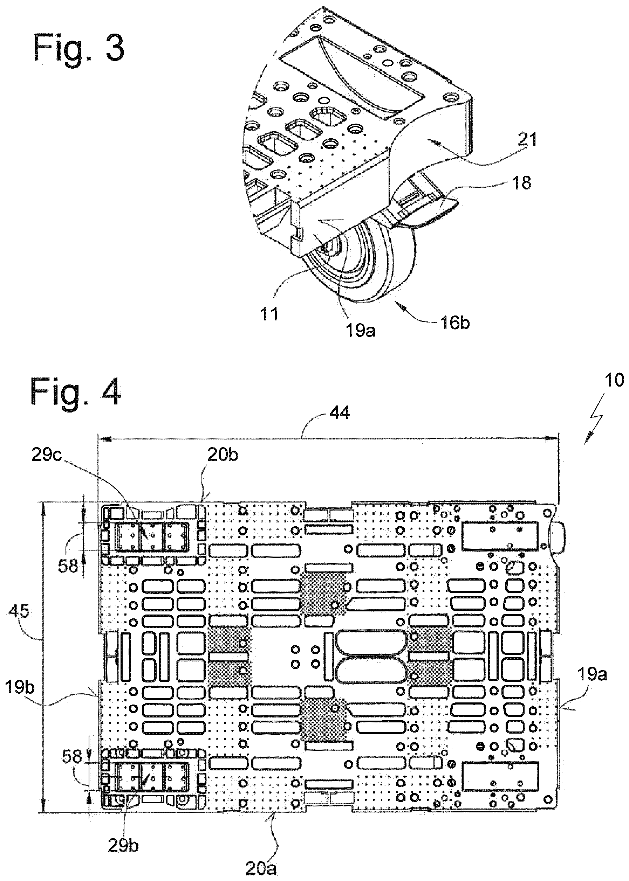

- Fig. 3: in einer vergrößerten Einzeldarstellung, etwa gemäß Ansichtspfeil III in Fig. 1 einen Eckbereich des Ladungsträgers der Fig. 1,
- Fig. 4: in einer Draufsicht, etwa gemäß Ansichtspfeil IV in Fig. 1, den Ladungsträger der Fig. 1,
- Fig. 5: den Ladungsträger der Fig. 1 in einer schematischen Längsansicht, etwa gemäß Ansichtspfeil V in Fig. 1,
- Fig. 6: in einer Darstellung gemäß Fig. 5 einen Stapelaufbau von zwei übereinander angeordneten Ladungsträgern,
- Fig. 7: die Stapelanordnung der Fig. 6, etwa gemäß Ansichtspfeil VII in Fig. 6 in einer Schmalseitenansicht,
- Fig. 8: den Stapelaufbau der Fig. 6 und 7 in einer perspektiven Schrägansicht,
- Fig. 9: die Stapelanordnung aus zwei Ladungsträgern gemäß Fig. 7 etwa entlang Schnittlinie IX-IX der Fig. 7, in einer teilgeschnittenen schematischen Ansicht,
- Fig. 10: in einer vergrößerten Teilkreisdarstellung, etwa gemäß Teilkreis X in Fig. 9 den Bereich einer taschenartigen Aufnahme mit einer Einrichtung zur Bewegungsverhinderung und die in die Aufnahme eingesetzte Rolle,
- Fig. 11: in einer vergrößerten schematischen Prinzipdarstellung den Bereich der taschenförmigen Aufnahme des oberen Ladungsträgers der Stapelanordnung in Fig. 9, etwa gemäß Teilkreis XI in Fig. 9, und
- Fig. 12: in einer Darstellung gemäß Fig. 11 die taschenartige Aufnahme mit Mitteln zum Ausgleich von Toleranzen, etwa gemäß Teilkreis XII in Fig. 9.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

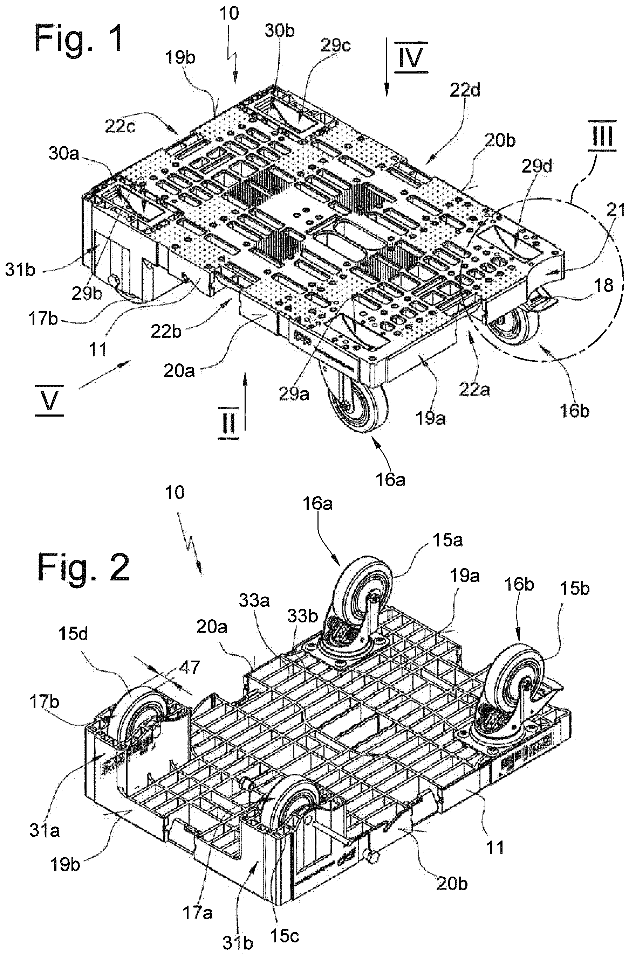

Ein Ausführungsbeispiel eines in seiner Gesamtheit mit dem Bezugszeichen 10 bezeichneten Ladungsträgers gemäß der Erfindung ist in den Figuren dargestellt: Fig. 1 zeigt das Ausführungsbeispiel des Ladungsträgers 10 in einer perspektivischen Ansicht.

Fig. 1 zeigt, dass der Ladungsträger 10 aus Kunststoff eine im wesentlichen rechteckige Kontur aufweist, mit einer Länge 44 und einer Breite 45. Diese Abmessungen 44, 45 des Ladungsträgers 10 entsprechen den Abmessungen einer Viertelpalette, also dem Viertel einer Eurostandardpalette. Demzufolge beträgt die Länge 44 etwa 60 cm und die Breite 45 etwa 40 cm. Von der Erfindung sind freilich auch nicht dargestellte Ladungsträger mit anderen Abmessungen umfasst.

Der Ladungsträger 10 weist ein Deck 11 mit einer Oberseite 12 auf, die eine Auflagefläche 13 bereitstellt. Bei dem Ausführungsbeispiel der Fig. 1 ist die Auflagefläche 17 dazu ausgebildet, unmittelbar Güter aufzunehmen, z. B. Kartonagesockel einer Displayvorrichtung. Auf dem Kartonagesockel können beispielsweise Kartonagetrays angeordnet sein. Auch andere Güter können von der Vorrichtung aufgenommen werden.

Von der Unterseite 14 des Decks 11 erstrecken sich zwei Kunststoffgehäuse 31a, 31b zur Rollenbefestigung weg. An der Unterseite 14 sind insgesamt vier Rollen 15a, 15b, 15c, 15d, jeweils in den Eckbereichen, angeordnet. Dabei sind zwei Rollen 16a, 16b als lenkbare Rollen ausgebildet und zwei Rollen 17a, 17b als feststehende Rollen. An einer der beiden lenkbaren Rollen 16b ist ein Feststellhebel 18 angeordnet. Dieser ist durch Anordnung einer bogenförmigen Ausnehmung 21 gut zugänglich und mit dem Fuß betätigbar.

Der Ladungsträger 10 weist zwei Schmalseiten 19a, 19b und zwei Längsseiten 20a, 20b auf. Jeweils etwa mittig jeder Längsseite 20a, 20b bzw. jeder Schmalseite 19a, 19b befinden sich Befestigungsöffnungen 22a, 22b, 22c, 22d, die zur Festlegung von Fortsätzen eines Kartonagedisplays dienen können, wie dies in der in Bezug genommenen DE 10 2011 003 999 A1 beschrieben ist.

Die Palette 10, die als Ladungsträger oder auch als Dolly bezeichnet wird, ist durch Verwendung von Versteifungsstreben, beispielsweise beziffert in Fig. 2 als 33a und 33b, leichtbauend, materialsparend und stabil ausgebildet.

Die Rollen 16a, 16b können über Befestigungsplatten 32 an dem Deck 11 festgeschraubt sein, oder in dem Kunststoffgehäuse 31 unter Zuhilfenahme eines Drehlagers und unter Zuhilfenahme von Befestigungselementen befestigt sein.

Die Besonderheit des Ladungsträgers 10 gemäß der Erfindung besteht in einer besonderen Ausbildung von taschenartigen Aufnahmen: In der Auflagefläche 13 sind, wie am besten in Fig. 1 erkennbar, insgesamt vier taschenförmige Aufnahmen 29a, 29b, 29c, 29d vorgesehen.

Für den Fall, dass mehrere Ladungsträger 10, 10' übereinander gestapelt werden sollen, können jeweils die Rollen des oberen Ladungsträgers 10' in die taschenartigen Aufnahmen des unteren Ladungsträgers 10 eingreifen.

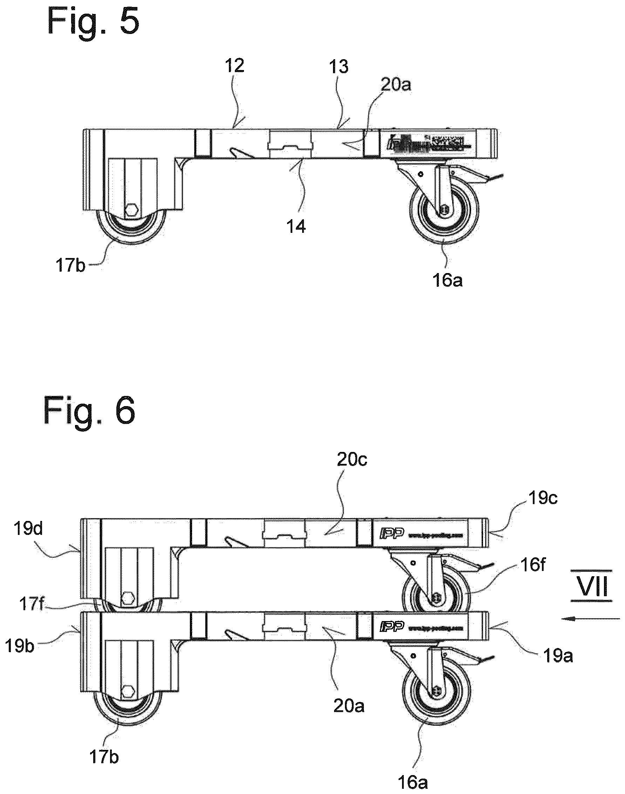

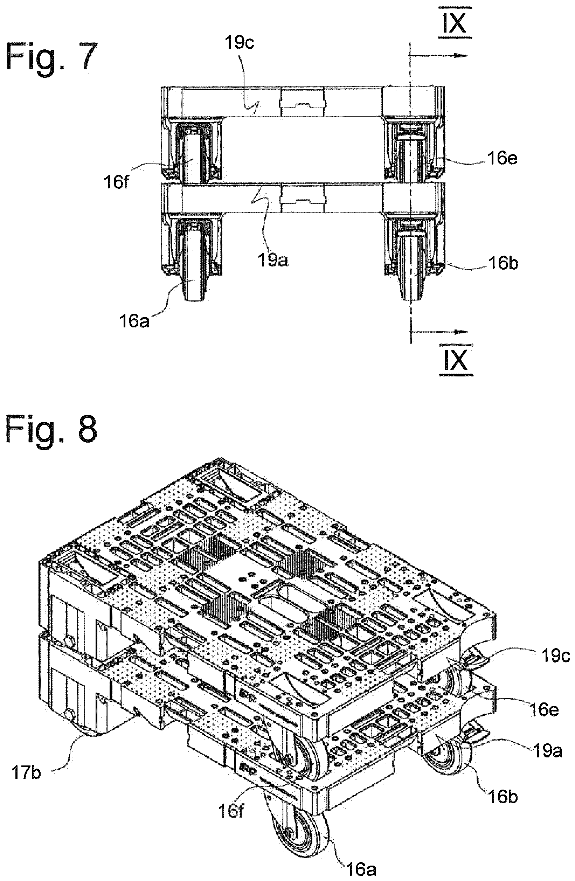

Die Figuren 6 bis 10 zeigen Stapelanordnungen von beispielhaft zwei Ladungsträgern 10, 10' übereinander. Ausführungsbeispiele erfindungsgemäßer Ladungsträger 10 können in beliebiger Stapelhöhe von beispielsweise bis zu 10 oder bis zu 20 oder bis zu 30 Stück übereinander gestapelt werden.

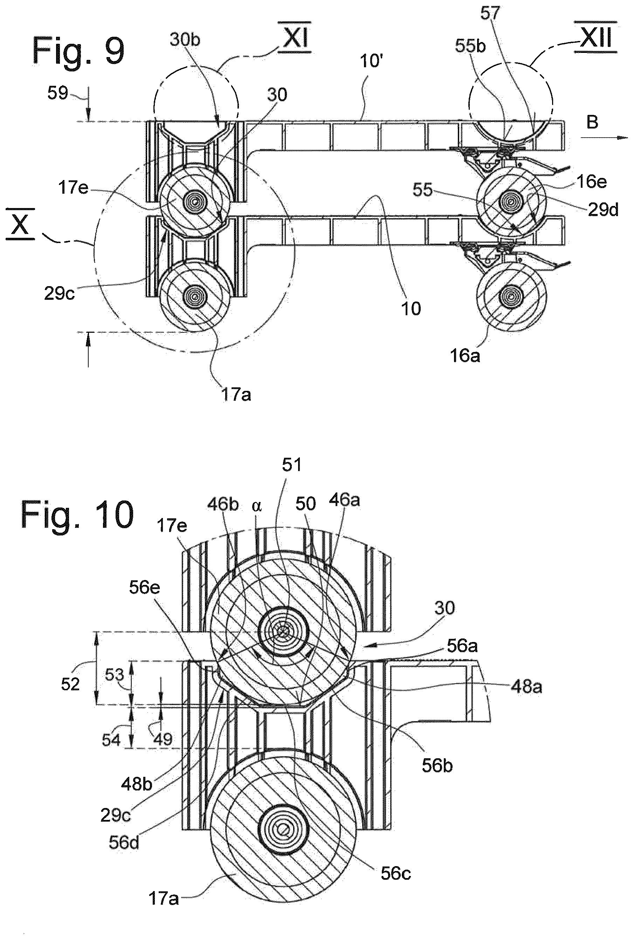

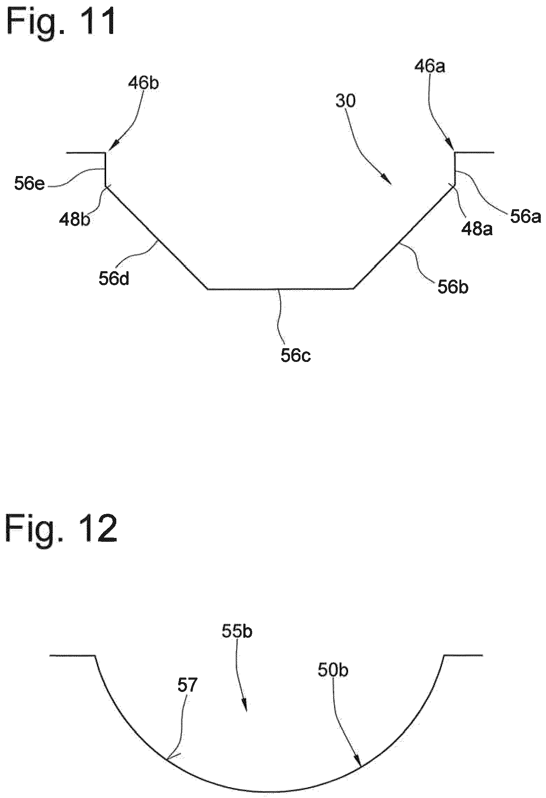

Jeweils zwei der vier taschenförmigen Aufnahmen, vorliegend bezogen auf Fig. 1 die beiden Aufnahmen 29a und 29d, sind, wie in der Querschnittsdarstellung der Fig. 9 und Fig. 12 dargestellt, mit einer bogenförmigen, durchgehend gekrümmten Kontur 57 ausgestattet. Diese bogenförmige Kontur ist auf den Außendurchmesser der darin einzusetzenden Rolle 16c (Fig. 9) abgestimmt. Hier ist die Kontur im wesentlichen herkömmlich gewählt.

Demgegenüber ist bei den beiden anderen Aufnahmen 29b und 29c des Ladungsträgers 10 der Fig. 1 eine besondere Ausgestaltung der Aufnahmen getroffen: An jeder der beiden Aufnahmen 29b, 29c ist eine Einrichtung 30 zur Bewegungsverhinderung der in diese Aufnahme eingesetzten Rolle vorgesehen: Diese Einrichtung ist mit dem Bezugszeichen 30 bezeichnet.

Wie am besten anhand der Figuren 10 und 11 ersichtlich, umfasst die Einrichtung 30 jeweils zwei Auflagebereiche 46a, 46b. Diese sind linienartig ausgebildet und erstrecken sich quer zur Papierebene der Fig. 10 entlang einer Länge, die der gesamten Breite 58 der Aufnahme 29c entspricht. Die Breite der Auflagebereiche 46a, 46b entspricht insoweit der Breite 47 (vgl. Fig. 2) der in die Aufnahme einzusetzenden Rolle 17e.

Wie Fig. 10 andeutet, liegt die eingesetzte Rolle 17e nur entlang der beiden Auflagebereiche 46a, 46b auf. Insbesondere befinden sich jeweils einwärts der Auflagebereiche 46a, 46b Freiräume 48a, 48b. Die Auflagebereiche 46a, 46b sorgen aber auch dafür, dass die Rolle 17e den Grund 50 der Aufnahme 29c nicht berührt, sondern dass dort ein angedeuteter, wenn auch kleiner, Spalt 49 verbleibt (Fig. 10). Durch diese Anordnung wird erreicht, dass die Rolle 17e nur an zwei Punkten oder an zwei Linien aufliegt.

Die taschenartig Aufnahme 29c weist eine Tiefe 53 auf, die mehr als die Hälfte des Radius 52 der Rolle 17e beträgt. Anders ausgedrückt, schließen die beiden Auflagebereiche 46a, 46b zu der Drehachse 51 einen Winkel α von etwa 120 bis 130° ein.

Auf diese Weise wird gewährleistet, dass eine ungewünschte Relativbewegung der Rolle 17e relativ zu der Aufnahme 29c verhindert wird. Damit wird auch eine Relativbewegung des jeweils oberen, aufliegenden Ladungsträgers 10' zu dem relativ unteren Ladungsträger 10 verhindert. Zugleich wird der jeweils obere Ladungsträger 10' relativ zu dem unteren Ladungsträger 10 spielfrei festgelegt. Ungewünschte Relativbewegungen werden auf diese Weise sicher verhindert.

Zum anderen wirkt jeweils eine der Aufnahmen 29b, 29c, die mit einer Einrichtung 30 zur Bewegungsverhinderung versehen sind, mit einer in Bewegungsrichtung B (Fig. 9) angeordneten weiteren Aufnahme 29a, 29d zusammen, an der Mittel 55 zur Erzielung eines Toleranzausgleiches angeordnet sind: Bei dem Ausführungsbeispiel der Figuren sind die Mittel 55 zum Toleranzausgleich durch eine bogenförmige Kontur 55 der taschenförmigen Aufnahme 29a, 29d gebildet, die an die Kontur der Außenumfangsfläche der Rolle 16e angepasst ist. Hier kann die Rolle 16e also entlang der zugehörigen Aufnahme 29a, 29d rollen oder verfahren, so, dass die Rolle 17e ihre Sollposition in der zugehörigen Aufnahme 29b, 29c sicher erreicht. Auch, wenn konstruktionsbedingt oder ggf. auch temperaturbedingt oder aufgrund von Verbiegungen oder Belastungen des Ladungsträgers 10 Abweichungen von den Soll-Längen 44 der Ladungsträger 10, 10' bestehen, oder Verformungen eingetreten sind, wird immer dafür gesorgt, dass die Rolle 17e ihre Sollposition in der Aufnahme 29c einnimmt.

Der Ladungsträger 10' wird damit spielfrei an dem Ladungsträger 10 festgelegt. Bei seitlichen Erschütterungen, Verkippungen oder Vibrationen ist durch die Einrichtung 30 zur Bewegungsverhinderung eine definierte Sollposition des Ladungsträgers 10' relativ zu dem Ladungsträger 10 gewährleistet.

Die Aufnahme 29b, 29c weist eine Kontur auf, die von einer Bogenform abweicht: Ausweislich der Figuren 10 und 11 ist die Kontur der taschenartige Aufnahme 29b, 29c von einer Mehrzahl von gradlinig ausgebildeten Segmenten 56a, 56b, 56c, 56d, 56e bereitgestellt. Diese bilden zusammen einen Polygonzug. Dieser kann zu einer Mittellängsebene symmetrisch ausgebildet sein. Demgegenüber ist die Kontur 57 der taschenartigen Aufnahme 29a, 29d durchgehend gekrümmt.

Mit der vorgeschlagenen Konstruktion kann eine Bewegungsverhinderung des Ladungsträgers 10' relativ zu dem Ladungsträger 10 gelingen, und dies bei nur sehr geringer Tiefe 53 der Aufnahme 29b, 29c. Hierdurch gelingt es, eine ausreichende Aufbauhöhe 54 in einem Bereich des Ladungsträgers unterhalb der taschenartigen Aufnahme 29c bereitzustellen, die noch eine stabile Konstruktion des Ladungsträgers 10 derartig zulässt, dass er die auftretenden Kräfte sicher aufnehmen kann, und dennoch eine nur geringe Stapelhöhe 59 (vgl. Fig. 9) erlaubt.

Die Darstellung der Figuren 9 und 10 zeigt einen nur sehr geringen Spalt 49 zwischen dem Grund 50 der Aufnahme 29c und dem Außenumfang der darin eingesetzten Rolle 17e. Diese Situation berücksichtigt, dass gemäß der Darstellung der Fig. 9 ein Stapel von nun zwei Ladungsträgern 10, 10' gebildet ist.

Für den Fall, dass der Stapel mehrere Ladungsträger umfasst, z. B. 10 oder 20 Ladungsträger, ist das Gesamtgewicht, das auf die Anordnung drückt sehr viel größer. Dabei kann von der Erfindung umfasst sein, dass aufgrund des hohen Gewichtes die Rolle 17e des Ladungsträgers 10' in eine berührende Situation mit dem Grund 50 des Ladungsträgers 10 hinein gedrückt wird. Es kann hier beispielsweise zu Materialverformungen kommen.

Der Hinweis, dass die Einrichtung 30 zur Bewegungsverhinderung bei einem Ausführungsbeispiel der Erfindung für eine Abstandshaltung sorgt, damit nach Möglichkeit eine Zweipunktauflage der Rolle 17e in der taschenförmigen Aufnahme 29c erreicht wird, bezieht sich insoweit insbesondere auf eine Situation, in der nur zwei Ladungsträger 10, 10' übereinander gestapelt sind.

Falls die Stapelhöhe größer gewählt wird, und eine höhere Gewichtskraft auf den Ladungsträger 10' drückt, kann durch eine optimierte Ausbildung der Auflagebereiche 46a, 46b auch erreicht werden, dass die Rolle 17e tiefer in die Aufnahme 29c eintauchen kann, und die Auflage 46a, 46b dabei eine Steuer- und Zentrierfunktion erfüllen.

Die Einrichtung 30 zur Bewegungsverhinderung stellt also ein entsprechendes Bewegungsspiel in Vertikalrichtung bei großen auftretenden Kräften in Vertikalrichtung bereit.

## Patentansprüche

1. Ladungsträger (10) zum Transport und/oder zur Aufbewahrung von Gütern, insbesondere in Form einer Dolly, umfassend ein aus Kunststoff bestehendes Deck (11), an dessen Oberseite (12) eine Auflagefläche (13) für die Güter oder für eine Einrichtung zur Aufnahme der Güter bereitgestellt ist, und an dessen Unterseite (14) eine Mehrzahl von Rollen (15a, 15b, 15c, 15d) angeordnet ist, **dadurch gekennzeichnet, dass** die Auflagefläche (13) wenigstens eine taschenartige Aufnahme (29b, 29c) aufweist, in die eine Rolle (17c) eines auf der Auflagefläche (13) angeordneten, weiteren Ladungsträgers (10') einsetzbar ist, wobei die Aufnahme (29b, 29c) eine Einrichtung (30) zur Bewegungsverhinderung der eingesetzten Rolle (17c) umfasst.

2. Ladungsträger nach Anspruch 1, **dadurch gekennzeichnet, dass** die Einrichtung (30) die in die Aufnahme (29b, 29c) eingesetzte Rolle (17c) bewegungsspielfrei festsetzt.

3. Ladungsträger nach Anspruch 1 oder 2, **dadurch gekennzeichnet, dass** der Einrichtung (30) Mittel (55) zum Ausgleich von Toleranzen, insbesondere von Fertigungstoleranzen, zugeordnet sind.

4. Ladungsträger nach einem der vorangegangenen Ansprüche, **dadurch gekennzeichnet, dass** die Einrichtung zwei Auflagebereiche (46a, 46b) für die eingesetzte Rolle (17c) bereitstellt.

5. Ladungsträger nach Anspruch 4, **dadurch gekennzeichnet, dass** die Auflagebereiche (46a, 46b) linienartig ausgebildet sind.

6. Ladungsträger nach Anspruch 4 oder 5, **dadurch gekennzeichnet, dass** die Auflagebereiche (46a, 46b) auf unterschiedlichen Seiten einer Drehachse (51) der Rolle (17c) angeordnet sind.

7. Ladungsträger nach einem der Ansprüche 4 bis 6, **dadurch gekennzeichnet, dass** die Auflagebereiche (46a, 46b) einen oberen Rand der Aufnahme (29b, 29c) bereitstellen.

8. Ladungsträger nach einem der Ansprüche 4 bis 7, **dadurch gekennzeichnet, dass** die Auflagebereiche (46a, 46b) die eingesetzte Rolle (17b) von dem Grund (50) der Aufnahme (29b, 29c) beabstandet halten.

9. Ladungsträger nach einem der vorangegangenen Ansprüche, **dadurch gekennzeichnet, dass** die Aufnahme (29b, 29c) eine von einer bogenförmigen Kontur abweichende Kontur aufweist.

10. Ladungsträger nach einem der vorangegangenen Ansprüche, **dadurch gekennzeichnet, dass** die Aufnahme eine von mehreren geradlinig ausgebildeten Segmenten (56a, 56b, 56c, 56d, 56e) zusammengesetzte Kontur aufweist.

11. Ladungsträger nach einem der vorangegangenen Ansprüche, **dadurch gekennzeichnet, dass** an der Auflagefläche (13) vier Aufnahmen (29a, 29b, 29c, 29d) angeordnet sind, von denen zwei Aufnahmen eine Einrichtung (30) zur Bewegungsverhinderung umfassen, wobei die beiden anderen Aufnahmen Mittel (55) zum Ausgleich von Toleranzen umfassen.

12. Ladungsträger nach einem der vorangegangenen Ansprüche, **dadurch gekennzeichnet, dass** sich von der Unterseite des Decks wenigstens ein Gehäuse (31) für eine Rolle weg erstreckt, das ein Lager zur Halterung der Rolle ausbildet, und das die Rolle im montierten Zustand zumindest teilweise überfängt.

13. Ladungsträger nach einem der vorangegangenen Ansprüche, **dadurch gekennzeichnet, dass** der Ladungsträger (10) eine randseitige Ausnehmung (21) zur Ermöglichung eines Zugangs zu einem Hebel (18) an einer lenkbaren Rolle (16a, 16b) aufweist,

14. Ladungsträger nach einem der vorangegangenen Ansprüche, **dadurch gekennzeichnet, dass** der Ladungsträger (10) Abmessungen (44, 45) aufweist, nämlich eine Länge und eine Breite, die den Abmessungen eines herkömmlichen Ladungsträgers entsprechen.

15. Vorrichtung zur Warenpräsentation im Einzelhandel, insbesondere nach Art eines Displays, umfassend einen Ladungsträger nach einem der vorangehenden Ansprüche.
